Europäisches Patentamt

European Patent Office

Office européen des brevets

(11) Veröffentlichungsnummer: **0 228 630 B1**

# EUROPÄISCHE PATENTSCHRIFT

(45) Veröffentlichungstag der Patentschrift: **15.05.91**

(51) Int. Cl.⁵: **B01D 53/34**

(21) Anmeldenummer: **86117211.2**

(22) Anmeldetag: **10.12.86**

(54) **Entschwefelungsverfahren.**

(30) Priorität: **19.12.85 DE 3544937**

(43) Veröffentlichungstag der Anmeldung:
**15.07.87 Patentblatt 87/29**

(45) Bekanntmachung des Hinweises auf die
Patenterteilung:
**15.05.91 Patentblatt 91/20**

(84) Benannte Vertragsstaaten:
**AT BE CH DE ES FR GB GR IT LI NL SE**

(56) Entgegenhaltungen:
**DE-A- 1 956 197      DE-A- 2 515 272**
**DE-B- 1 269 601      US-A- 3 632 305**
**US-A- 3 632 306      US-A- 4 367 212**

(73) Patentinhaber: **Kali-Chemie Aktiengesellschaft
Postfach 220, Hans-Böckler-Allee 20
W-3000 Hannover 1(DE)**

(72) Erfinder: **Pfeifer, Hans Ludwig, Dr.
Dipl.-Chem.
Silbergrube 12
W-5462 Bad Hönningen(DE)**
Erfinder: **Mingels, Norbert, Dipl.-Ing.
Hauptstrasse 159
W-5462 Bad Hönningen(DE)**
Erfinder: **Riechers, Heinz-Herrmann, Dr.
Dipl.-Chem.
Kreuzgasse 3
W-5462 Bad Hönningen(DE)**

(74) Vertreter: **Lauer, Dieter, Dr.
c/o Kali-Chemie Aktiengesellschaft Postfach
220
W-3000 Hannover 1(DE)**

**Beschreibung**

Die vorliegende Erfindung betrifft ein Verfahren zur Entschwefelung von $SO_2$ und $H_2S$ enthaltendem Abgas.

In industriellen Verfahren anfallendes Abgas muß zur Entfernung von Schadstoffen intensiven Reinigungsverfahren unterworfen werden. Insbesondere zur Entfernung von $SO_2$ sind eine Vielzahl von Verfahren bekannt geworden, die zum Teil aber das Problem nicht lösen, sondern durch Schaffung flüssiger oder fester Abfallstoffe Entsorgungsprobleme bereiten.

Die US-A 3 632 306 offenbart ein Verfahren zur Entschwefelung von $SO_2$ (und gegebenenfalls $SO_3$) enthaltendem Abgas. Das Abgas. das $SO_2$ (gegebenenfalls neben $SO_3$) als einzige schwefelhaltige Verunreinigung enthält wird mit einer wäßrigen Suspension kontaktiert welche u. a. Bariumcarbonat sowie Additive enthält, dann werden Feststoff und Lösung getrennt und die abgetrennte Lösung rückgeführt. Das Abgas wird in die Umgebung entlassen.

Die DE-B 12 69 601 offenbart ein Verfahren zur Entschwefelung von $H_2S$ enthaltendem Abgas. Das Abgas das $II_2S$ als einzige schwefelhaltige Verunreinigung enthält, wird mit starken Alkalien und $H_2 O_2$ enthaltendem Wasser kontaktiert und das entschwefelte Abgas in die Umgebung entlassen.

Keiner der beiden Entgegenhaltungen ist ein Hinweis zu entnehmen ein dieser Verfahren auf die Entschwefelung von Abgas anzuwenden, welches sowohl $SO_2$ als auch $H_2S$ enthält, oder diese beiden Verfahren zu kombinieren. Dies ist auch nicht überraschend, da la bekannt ist, daß sich aus Gasgemischen, die sowohl $SO_2$ als auch $H_2S$ enthalten, in Gegenwart von Wasser Schwefel abscheidet (siehe Gmelins Handbuch der anorganischen Chemie. Band 8B (1953), Seiten 278 - 280, insbesondere Seite 280 oben), wobei dieser Schwefel nachteiligerweise meist in fein verteilter bis kolloider Form anfällt (siehe Gmelins Handbuch der anorganischen Chemie, 8. Auflage Band 8A (1953), Seite 254, letzter Satz des vorletzten Absatzes).

Aufgabe der vorliegenden Erfindung ist es, ein Verfahren zur Entfernung von $SO_2$ und $H_1 S$ aus Abgasen zur Verfügung zu stellen, das von Entsorgungsproblemen weitgehend frei ist.

Diese Aufgabe wird gelöst durch ein Verfahren zur Entschwefelung von $SO_2$ und $H_2S$ enthaltendem Abgas, dadurch gekennzeichnet, daß man

a) zur Entfernung von $SO_2$ das Abgas mit einer wässrigen Suspension von Barium- oder Strontium-Carbonat kontaktiert,
b) die die Stufe a) verlassende Dispersion in Feststoff und Lösung trennt,
c) die abgetrennte Lösung zur Bereitung von Barium- oder Strontium-Carbonat-Suspension rückführt und
d) das die Stufe a) verlassende, teilgereinigte Abgas zur Entfernung von $H_2S$ mit wässriger, Aktivsauerstoff enthaltender alkalischer Lösung behandelt.

$SO_2$ und $H_2S$ enthaltendes Abgas fällt in vielen industriellen Verfahren an, in denen Schwefel enthaltende Verbindungen verarbeitet werden. Besonders genannt seien Abgase, die aus Claus-Anlagen anfallen, sowie Abgase, die bei der Verarbeitung von Sulfat und/oder Sulfid-Mineralen entstehen. Ein besonderes Beispiel für solches Abgas ist jenes, das bei der Herstellung von Barium- und/oder Strontium-Verbindungen über die an sich bekannten Stufen Reduktion des Sulfates zu "schwarzer Asche" sowie deren Laugung anfällt.

Erfindungsgemäß wird solches Abgas in einer Stufe a) mit einer wässrigen Suspension von Barium- oder Strontium-Carbonat behandelt. Es empfiehlt sich, das anfallende Abgas vor Einleitung in die Stufe a) über einen Wärmetauscher zu führen und auf Temperaturen unter 100 °C, vorzugsweise auf 90 bis 60 °C abzukühlen.

In der Stufe a) reagiert das $SO_2$ mit dem Carbonat entsprechend folgender Umsatzgleichung

$$MCO_3 + SO_2 \rightarrow MSO_3 + CO_2 \ (M = Sr, Ba),$$

d.h. $SO_2$ wird zu Sulfit umgewandelt, das wegen seiner geringen Löslichkeit in Wasser in fester, feinteiliger Form anfällt.

Die Stufe a) ist in üblicher Art derart ausgebildet, daß ein inniger Kontakt zwischen Abgas und Suspension erreicht wird. Dieser innige Kontakt kann dadurch erreicht werden, daß Suspension durch Versprühen im Abgas fein verteilt wird oder daß das Abgas in einer Kolonne in feinverteilter Form durch die Suspension hindurchperlt, wobei übliche Einbauten in der Kolonne die Kontaktzeit zwischen Abgas und Suspension verlängern. Solche Einrichtungen sind allgemein als Naßwäscher oder Naßabscheider gut bekannt und beispielsweise in Ullmann, 4. Auflage, Band 6, Seite 301 ff beschrieben.

Im erfindungsgemäßen Verfahren wird bevorzugt ein zwei-oder mehrstufiger Naßwäscher bekannter Bauart eingesetzt. Insbesondere werden Abgas und Suspension dabei im Gegenstrom geführt, d.h. Abgas wird beispielsweise mit Hilfe eines Gebläses in die erste Stufe eingeführt und frische Carbonat-Suspension in die zweite Stufe. Im Sumpf der zweiten Waschstufe anfallende Carbonat/Sulfit-Suspension wird in die erste Waschstufe gepumpt und aus deren Sumpf als im wesentlichen aus Sulfit bestehende Dispersion abgezogen. Am Kopf der zweiten Waschstufe tritt teilgereinigtes Abgas aus, das nur noch sehr geringe $SO_2$ -Gehalte aufweist.

Die einzusetzende Carbonat-Suspension kann Carbonat in weiten Konzentrationsbereichen enthalten. Vorteilhaft werden Suspensionen mit 1 bis 150 g/l Barium- bzw. Strontium-Carbonat, vorzugsweise 1 bis 50 g/l, verwendet. Auch die Teilchengröße der Carbonat-Suspension kann in weiten Bereichen variieren. Gute Ergebnisse werden mit Suspensionen erzielt, deren Teilchen im wesentlichen im Bereich von 0,1 bis 10 $\mu$, vorzugsweise 0,1 bis 2 $\mu$, liegen.

In der Stufe b) des erfindungsgemäßen Verfahrens wird die die Stufe a) verlassende wässrige Dispersion, die im wesentlichen aus Sulfit besteht, in an sich bekannter Weise in Feststoff und Lösung getrennt. Gute Ergebnisse werden durch Behandlung mit einem Eindicker erzielt, dessen Überlauf als praktisch feststofffreie Lösung anfällt und dessen Unterlauf mittels Filterpresse oder Zentrifuge leicht auf hohe Feststoffanteile gebracht werden kann. Die hier noch anfallenden Anteile an Lösung werden mit dem Hauptteil Lösung aus dem Eindicker-Überlauf vereinigt und in Stufe c) zur Herstellung von frischer Carbonat-Suspension rückgeführt.

Diese Suspension kann man durch Suspendieren von festem Barium- oder Strontium-Carbonat in rückgeführte Lösung mittels Rührer oder hochtouriger Dispergieraggregate herstellen. In einer bevorzugten Variante und wenn das erfindungsgemäße Entschwefelungsverfahren im Zuge einer Barium-oder Strontium-Carbonat-Herstellung eingesetzt wird, setzt man bei jener Herstellung anfallendes, filter- bzw. zentrifugenfeuchtes Carbonat ein.

In einer vorteilhaften Variante des Verfahrens wird der in Stufe b) anfallende Feststoff nicht einer Deponie zugeführt, sondern in dem Produktionsprozeß zur Herstellung von Barium- bzw. Strontium-Verbindungen überführt. Der Feststoff kann dabei als solcher, oder angeschlämmt mit Wasser, direkt mit Mineralsäuren wie Salzsäure, Salpetersäure etc. zu entsprechenden Barium- oder Strontium-Salzen oder deren Lösungen umgesetzt werden.

Erfindungsgemäß wird aber bevorzugt, den aus Stufe b) anfallenden Feststoff zusammen mit Barium-bzw. Strontium-Sulfat in der Sulfat-Reduktions-Stufe einzusetzen, d.h. in den Drehrohrofen zu überführen, in dem die Reduktion zu "schwarzer Asche" durchgeführt wird.

Der anfallende Feststoff wird also in jedem Fall zu Wertstoffen wieder aufgearbeitet und zwar einerseits hinsichtlich seines Barium- bzw. Strontium-Gehaltes andererseits aber auch hinsichtlich des Schwefelgehaltes. So wird das aus dem Abgas als Sulfit entfernte $SO_2$ im Drehrohrofen in Sulfid überführt, dessen Schwefelanteil in bekannter Weise nach Laugung und/oder Umsetzung mit $CO_2$ oder Mineralsäuren über eine Claus-Anlage als elementarer Schwefel oder nach Umsetzung mit Carbonaten als Sulfid bzw. Hydrogensulfid gewinnbar ist.

Das die Stufe a) verlassende, teilgereinigte Abgas, das noch $H_2S$ enthält, wird in einer Stufe d) des Verfahrens zur Entfernung des $H_2S$ mit einer alkalischen ($p_H \geqq 7$), wässrigen, Aktivsauerstoff enthaltenden Lösung behandelt.

Eine solche Lösung enthält bevorzugt 0,5 bis 10 g/l Aktivsauerstoff (manganometrisch ermittelt); sie weist bevorzugt einen $p_H$-Wert von über 10, insbesondere von 10,5 bis über 14 auf. Als solche Lösung können entsprechende, aus $H_2O_2$ oder Aktivsauerstoff enthaltenden Stoffen, ggf. unter Zusatz von Alkali hergestellte Lösungen verwendet werden, wobei als Aktivsauerstoff enthaltende Stoffe Perborate, Percarbonate und/oder Peroxide der Alkali- und Erdalkalimetalle genannt seien. Es können aber auch mit Vorteil Abfälle aus der Produktion von Perverbindungen eingesetzt werden, wie beispielsweise Mutterlaugen aus der Herstellung der genannten Perverbindungen, womit ein besonders hoher Grad an Umweltfreundlichkeit des erfindungsgemäßen Abgasbehandlungsverfahrens erzielbar ist.

Die aus Stufe d) austretende Lösung enthält im wesentlichen nur Natriumsulfat; das austretende gereinigte Abgas ist im wesentlichen frei von $SO_2$ und $H_2S$ sowie frei von Staub und kann, vorzugsweise nach Aufheizung auf Temperaturen über 100° C, vorzugsweise auf 110 bis 150° C, über einen Abgaskamin abgegeben werden.

Beispiel

Abgas mit folgender Zusammensetzung:

3

| SO₂ | 2 | bis | 15 | g/Nm³ |
| H₂S | 30 | bis | 300 | mg/Nm³ |
| Staub | 30 | bis | 150 | mg/Nm³ |

wurde nach Kühlung auf 80°C in einem zweistufigen Gegenstrom-Gaswäscher mit Barium-Carbonat-Suspension (5 g/l Barium-Carbonat, mittlere Teilchengröße circa 1 $\mu$) behandelt. Der teilgereinigte Abluftstrom wurde mit einer Waschlösung ($p_H$ 12, 1 g/l Aktivsauerstoff) von $H_2S$ befreit.

Die aus Stufe a) austretende Dispersion wurde mittels Eindicker und Zentrifuge in Lösung und Feststoff getrennt, die zur Herstellung von frischer Barium-Carbonat-Suspension bzw. in dem Drehrohrofen zur Bariumsulfat-Reduktion zurückgeführt wurden.

Das aus der Abgasreinigung austretende Abgas, das folgende Zusammensetzung aufwies

| SO₂ | unter | 500 | mg/Nm³ |
| H₂S | unter | 5 | mg/Nm³ |
| Staub | unter | 10 | mg/Nm³ |

wurde über einen Wärmetauscher auf 130°C aufgeheizt und einem Abgaskamin zugeleitet.

## Ansprüche

1. Verfahren zur Entschwefelung von $SO_2$ und $H_2S$ enthaltendem Abgas, dadurch gekennzeichnet, daß man
   a) zur Entfernung von $SO_2$ das Abgas mit einer wässrigen Suspension von Barium- oder Strontium-Carbonat kontaktiert,
   b) die die Stufe a) verlassende Dispersion in Feststoff und Lösung trennt,
   c) die abgetrennte Lösung zur Bereitung von Barium- oder Strontium-Carbonat-Suspension rückführt und
   d) das die Stufe a) verlassende, teilgereinigte Abgas zur Entfernung von $H_2S$ mit wässriger, Aktivsauerstoff enthaltender alkalischer Lösung behandelt.

2. Verfahren nach Anspruch 1, dadurch gekennzeichnet, daß man das Abgas vor Einleitung in die Stufe a) auf Temperaturen unter 100°C, vorzugsweise auf 90 bis 60°C, abkühlt.

3. Verfahren nach einem der Ansprüche 1 oder 2, dadurch gekennzeichnet, daß man in Stufe a) den Kontakt zwischen Abgas und Suspension in einem zwei- oder mehrstufigen Naßwäscher, vorzugsweise im Gegenstrom, vornimmt.

4. Verfahren nach einem der vorhergehenden Ansprüche, dadurch gekennzeichnet, daß man in Stufe a) eine Suspension mit 1 bis 150 g/l Barium- bzw. Strontium-Carbonat einsetzt.

5. Verfahren nach einem der vorhergehenden Ansprüche, dadurch gekennzeichnet, daß man eine Suspension mit Carbonatpartikeln im Bereich von 0,1 bis 10 $\mu$ einsetzt.

6. Verfahren nach einem der vorhergehenden Ansprüche, dadurch gekennzeichnet, daß man in Stufe b) zur Trennung einen Eindicker, vorzugsweise in Kombination mit einer Zentrifuge oder Filterpresse einsetzt.

7. Verfahren nach einem der vorhergehenden Ansprüche, dadurch gekennzeichnet, daß man den in Stufe b) anfallenden Feststoff in die Barium- bzw. Strontiumsulfid-Herstellung überführt.

8. Verfahren nach einem der vorhergehenden Ansprüche, dadurch gekennzeichnet, daß man in Stufe d) eine Lösung einsetzt, die 0,5 bis 10 g/l Aktivsauerstoff enthält.

9. Verfahren nach einem der vorhergehenden Ansprüche, dadurch gekennzeichnet, daß man in Stufe d) eine Lösung mit einem $p_H$ -Wert von mindestens 10 oder höher einsetzt.

10. Verfahren nach einem der vorhergehenden Ansprüche, dadurch gekennzeichnet, daß man das aus Stufe d) resultierende, gereinigte Abgas vor Einleitung in den Abluft-Kamin auf Temperaturen über 100 °C, vorzugsweise auf 110 bis 150 °C, aufheizt.

## Claims

1. Process for the desulphurisation of waste gas containing $SO_2$ and $H_2S$, characterised in that
   a) in order to remove $SO_2$ the waste gas is contacted with an aqueous suspension of barium carbonate or strontium carbonate,
   b) the dispersion leaving stage a) is separated into solid and solution,
   c) the separated solution is recycled for preparing barium carbonate or strontium carbonate suspension, and
   d) the partially purified waste gas leaving stage a) is treated with aqueous alkaline solution containing active oxygen in order to remove $H_2S$.

2. Process according to Claim 1, characterised in that the waste gas is cooled to temperatures below 100 °C, preferably to 90 to 60 °C, before introduction into stage a).

3. Process according to one of Claims 1 or 2, characterised in that in stage a) the contact between the waste gas and suspension is performed in a two-stage or multi-stage wet washer, preferably in a reverse flow.

4. Process according to one of the preceding Claims, characterised in that a suspension with 1 to 150 g/l barium carbonate or strontium carbonate is used in stage a).

5. Process according to one of the preceding Claims, characterised in that a suspension with carbonate Particles in the range of 0.1 to 10 $\mu$ is used.

6. Process according to one of the preceding Claims, characterised in that a thickener, preferably in combination with a centrifuge or filter press, is used in stage b) for separation.

7. Process according to one of the preceding Claims, characterised in that the solid produced in stage b) is transferred into the barium sulphide or strontium sulphide production.

8. Process according to one of the preceding Claims, characterised in that a solution is used in stage d) which contains 0.5 to 10 g/l active oxygen.

9. Process according to one of the preceding Claims, characterised in that a solution with a pH value of at least 10 or higher is used in stage d).

10. Process according to one of the preceding Claims, characterised in that the purified waste gas resulting from stage d) is heated to temperatures above 100 °C, Preferably to 110 to 150 °C, before introduction into the exhaust gas stack.

## Revendications

1. Procédé de désulfuration d'un gaz résiduaire contenant $SO_2$ et $H_2S$ , caractérisé en ce que
   a) pour l'élimination de $SO_2$, on met le gaz résiduaire en contact avec une suspension aqueuse de carbonate de baryum ou de strontium,
   b) qu'on sépare la dispersion quittant l'étape a) en des matières solides et en une solution,

c) qu'on recycle la solution séparée en vue de la préparation d'une suspension de carbonate de baryum ou de strontium et

d) qu'on traite le gaz résiduaire partiellement épuré quittant l'étape a), en vue de l'élimination de l'$H_2S$, par une solution alcaline aqueuse contenant de l'oxygène actif.

2. Procédé selon la revendication 1, caractérisé en ce que, avant admission dans l'étape a), on refroidit le gaz résiduaire à des températures au-dessous de 100°C, de préférence de 90 à 60°C.

3. Procédé selon l'une des revendications 1 ou 2, caractérisé en ce qu'on réalise le contact dans l'étape a) entre le gaz résiduaire et la suspension dans un épurateur humide à deux ou plusieurs étages, de préférence à contre-courant.

4. Procédé selon l'une des revendications précédentes, caractérisé en ce qu'on met en oeuvre dans l'étape a) une suspension avec 1 à 150 g/l de carbonate de baryum ou de strontium.

5. Procédé selon l'une des revendications précédentes, caractérisé en ce qu'on met en oeuvre une suspension avec des particules de carbonate se situant dans le domaine de 0,1 à 10 $\mu$.

6. Procédé selon l'une des revendications précédentes, caractérisé en ce que, dans l'étape b), on met en oeuvre pour la séparation un épaississeur, de préférence en association avec une centrifugeuse ou un filtre-presse.

7. Procédé selon l'une des revendications précédentes, caractérisé en ce qu'on transfère les matières solides obtenues dans l'étape b) vers la préparation de sulfure de baryum, respectivement de strontium.

8. Procédé selon l'une des revendications précédentes, caractérisé en ce que, dans l'étape d), on met en oeuvre une solution contenant 0,5 à 10 g/l d'oxygène actif.

9. Procédé selon l'une des revendications précédentes, caractérisé en ce que, dans l'étape d), on met en oeuvre une solution ayant une valeur de pH d'au moins 10 ou plus.

10. Procédé selon l'une des revendications précédentes, caractérisé en ce que, avant admission dans la cheminée de gaz de combustion, on chauffe le gaz résiduaire épuré issu de l'étape d) à des températures au-dessus de 100°C, de préférence de 110 à 150°C.